# EUROPEAN PATENT APPLICATION

(11) **EP 4 362 160 A1**
(43) Date of publication of application: **01.05.2024**
(21) Application number: 23187832.3
(22) Date of filing: 26.07.2023
(51) Int. Cl.: H01M 10/0562, C01D 15/00

(54) **SOLID ELECTROLYTE AND MANUFACTURING METHOD FOR THE SAME**

(30) Priority: 27.10.2022 KR 20220140030
(71) Applicant: ECOPRO BM CO., LTD., Cheongju-si, Chungcheongbuk-do 28117 (KR)
(72) Inventor: YANG, A Reum, 28117 Chungcheongbuk-do (KR); JUNG, Hyunsu, 28117 Chungcheongbuk-do (KR); KIM, Mi Jin, 28117 Chungcheongbuk-do (KR); BAEK, Hyeon Woo, 28117 Chungcheongbuk-do (KR); JUNG, Hayoung, 28117 Chungcheongbuk-do (KR); SEOL, Jaechang, 28117 Chungcheongbuk-do (KR)
(74) Representative: Murgitroyd & Company

(57) **Abstract**

Disclosed is a method for manufacturing a sulfide-based solid electrolyte, the method including: providing a sulfide-based compound; adding the sulfide-based compound to a silicone oil, followed by milling; and drying the milled sulfide-based compound.

## Description

### CROSS-REFERENCE TO RELATED APPLICATION(S)

This application is based on and claims priority under 35 U.S.C. 119 to Korean Patent Application No. 10-2022-0140030, filed on October 27, 2022, in the Korean Intellectual Property Office, the disclosure of which is herein incorporated by reference in its entirety.

### BACKGROUND OF THE INVENTION

### 1. Field of the invention

The present disclosure relates to a solid electrolyte and a manufacturing method therefor and, more specifically, to a manufacturing method for a sulfide-based solid electrolyte with improved work stability by using a solvent harmless to the human body and to a solid electrolyte manufactured thereby.

### 2. Description of the Prior Art

In recent years, secondary batteries are widely used in large-sized devices, such as automobiles and power energy storage systems, to small-sized devices, such as mobile phones, camcorders, and laptop computers.

As the application field of secondary batteries is widening, the batteries are highly required to have improved safety and higher performance. Lithium secondary batteries, one type of the secondary batteries, have higher energy density and larger capacity per unit area compared with nickel-manganese batteries or nickel-cadmium batteries.

However, systems currently applied to most commercial lithium ion batteries employ organic liquid electrolytes containing lithium salts, and thus have limitations in terms of improvement in safety and energy density.

Therefore, for the improvement in safety, an interest in all-solid-state batteries using solid electrolytes but not liquid electrolytes have recently increased. The solid electrolytes have flame retardancy compared with the liquid electrolytes and thus are highly safe and are also advantageous to increase energy density. As such solid electrolytes, oxide-based solid electrolytes and sulfide-based solid electrolytes have been developed so far.

Of these, perovskite, garnet, NASICON, and the like have been developed as oxide-based solid electrolytes, and these are excellent in stability and high-temperature stability in air but have low ion conductivity and high grain boundary resistance. On the other hand, sulfide-based solid electrolytes have high ion conductivity close to those of liquid electrolytes and can be molded only by press molding due to the facilitated adhesiveness to grain boundaries by pressing, and thus the sulfide-based solid electrolytes are evaluated to be closest to commercialization.

Meanwhile, atomization techniques are essential to improve the contactability of solid electrolytes inside all-solid lithium ion secondary batteries, and atomization is performed by dry or wet milling. Especially, for the sulfide-based solid electrolytes, low-polar and non-polar solvents, such as toluene, xylene, and heptane that do not react with sulfides, are used, but such solvents are harmful to the human body to threaten the safety of workers.

### Prior Art Document

### Patent Document

Korean Patent No. 10-2072005

### SUMMARY OF THE INVENTION

The present disclosure has been made in order to solve the above-mentioned problems, and an aspect of the present disclosure is to provide a method for manufacturing a sulfide-based solid electrolyte with improved work safety by using a solvent harmless to the human body and a solid electrolyte manufactured thereby and having improved ion conductivity.

In accordance with an aspect of the present disclosure, there is provided a method for manufacturing a sulfide-based solid electrolyte, the method including: providing a sulfide-based compound; adding the sulfide-based compound to a silicone oil, followed by milling; and drying the milled sulfide-based compound.

The silicone oil may be a cyclic polysiloxane, a linear polysiloxane, or a mixture thereof.

The silicone oil may be at least one selected from the group consisting of octamethyltrisiloxane, decamethyltetrasiloxane, dodecamethylpentasiloxane, decamethylcyclopentasiloxane, cyclopentasiloxane, cyclohexasiloxane, dimethicone, methyl trimethicone, and caprylyl methicone.

The milling may be performed by using any one of a ball mill or a bead mill.

The milling may involve no dispersant.

The sulfide-based solid electrolyte may have a particle size (D50) of 4 gm or less.

The sulfide-based compound may be added in a content of 5 to 30 parts by weight relative to 100 parts by weight of the silicone oil.

The sulfide-based compound may include lithium, phosphor, sulfur, and a halogen element.

In accordance with another aspect of the present disclosure, there is provided a solid electrolyte manufactured by the method.

The solid electrolyte may have an argyrodite-type crystal structure.

The solid electrolyte may have an ion conductivity of 1.5 mS/cm or more.

In accordance with another aspect of the present disclosure, there is provided an electrode including the solid electrolyte.

In accordance with another aspect of the present disclosure, there is provided a secondary battery including the electrode.

According to the present disclosure, a method for manufacturing a solid electrolyte is provided that attains an improvement in work stability and thus has an advantage in the entire process design.

The present disclosure is not limited to the above advantages, but other advantages not described herein may be clearly understood by a person skilled in the art to which the present disclosure pertains ("a person skilled in the art") from the description of claims.

### BRIEF DESCRIPTION OF THE DRAWINGS

Embodiments of the present disclosure will be described with reference to the accompanying drawings in which like reference numbers indicate like elements, but are not limited thereto.
FIG. 1 shows X-ray diffraction analysis results of Example 1 and Comparative Example 1 of the present disclosure.
FIG. 2 shows Raman spectrum analysis results of Example 1 and Comparative Example 1 of the present disclosure.
FIG. 3 shows particle size analysis results of solid electrolytes of Examples 1 and 2 and Comparative Examples 1 and 2 of the present disclosure by using particle size analysis (PSA).
FIG. 4 shows ion conductivity measurement results of Examples 1 and 2 and Comparative Examples 1 and 2 of the present disclosure.

### DETAILED DESCRIPTION OF THE EXEMPLARY EMBODIMENTS

Hereinafter, embodiments of the present disclosure will be described clearly and in detail with reference to the accompanying drawings so that a person skilled in the art can easily implement the present disclosure. However, these are provided as exemplary embodiments, and the present disclosure is not limited thereto, and the present disclosure is defined by only the scope of the claims to be described later.

The terms and words used in this description and the appended claims are not to be interpreted in common or lexical meaning but, based on the principle that an inventor can adequately define the meanings of terms to best describe the disclosure, to be interpreted in the meaning and concept conforming to the technical concept of the present disclosure.

As used herein, terms such as "comprising", "containing", or "including" should be understood as openended terms that do not preclude the inclusion of other technical features.

As used herein, "preferable" and "preferably" refer to embodiments of the disclosure that may afford certain advantages under certain circumstances. However, other embodiments may also be preferable under the same or other circumstances. Furthermore, the recitation of one or more preferable embodiments does not imply that other embodiments are not useful, and is not intended to exclude other embodiments from the scope of the disclosure.

In accordance with an aspect of the present disclosure, there is provided a method for manufacturing a sulfide-based solid electrolyte, the method including: providing a sulfide-based compound; adding the sulfide-based compound to a silicone oil, followed by milling; and drying the milled sulfide-based compound.

In an embodiment of the present disclosure, the sulfide-based compound may contain lithium, phosphorus, sulfur, and a halogen element, and may further contain a doping material in addition to germanium and silicon.

In the adding of the sulfide-based compound to the silicone oil, followed by milling, the silicone oil may be provided as a solvent, and a slurry prepared by adding the sulfide-based compound to the solvent may be milled. In such a wet milling process, low-polar and non-polar solvents, such as toluene, xylene, and heptane, are used since they are not reactive with sulfide-based solid electrolytes, but these solvents are harmful to the human body to threaten the safety of workers. However, the silicone oil according to one embodiment of the present disclosure is not only harmless to the human body, but also has advantages of enabling more precise control of the particle size and improving ionic conductivity as described later.

According to a preferable embodiment of the present disclosure, the milling may not involve a dispersant. In the wet milling process, a separate dispersant preventing aggregation is added to reduce the particle size of the sulfide-based solid electrolyte, but in the present disclosure, the milling to a smaller particle size can be attained even without the addition of a dispersant.

The milling method is not particularly limited, but for example, any one of a ball mill or a bead mill may be used.

Therefore, the particle size (D50) of the sulfide-based solid electrolyte may be 4 gm or smaller, 2 gm or smaller, or 1.5 gm or smaller.

The silicone oil may be a cyclic polysiloxane, a linear polysiloxane, or a mixture thereof, but is not particularly limited thereto, and for example, the silicone oil may be at least one selected from the group consisting of decamethyltetrasiloxane, dodecamethylpentasiloxane, decamethylcyclopentasiloxane, cyclopentasiloxane, cyclohexasiloxane, dimethicone, methyl trimethicone, and caprylyl methicone.

The kinematic viscosity (CS) of the silicone oil may be 0.5 to 5 CS, preferably 1 to 1.5 CS. Although not particularly limited, the silicone oil may have a weight average molecular weight of 200 to 500 and a boiling point of 150 to 250°C. If the above requirements are not satisfied, the removal of a solvent is not easy due to a high boiling point.

The sulfide-based compound is preferably added in a content of 5 to 30 parts by weight relative to 100 parts by weight of the silicone oil. More than 30 parts by weight of the sulfide-based compound may result in a deterioration in milling efficiency.

In accordance with another aspect of the present disclosure, there is provided a sulfide-based solid electrolyte manufactured by the above-described method. A sulfide-based solid electrolyte according to an embodiment of the present disclosure may have an argyrodite-type crystal structure. In addition, the solid electrode according to the present disclosure can exhibit a high ion conductivity of 1.5 mS/cm or more, which is an ion conductivity equal to or higher than conventional art using xylene, and can exhibit preferably 1.9 mS/cm or more, and more preferably 2.2 mS/cm or more.

According to an embodiment of the present disclosure, an electrode including the solid electrolyte may be provided, and a secondary battery including the electrode may be provided.

Hereinafter, the present disclosure will be described in detail with reference to exemplary embodiments. However, the following exemplary embodiments are merely preferable embodiments of the present disclosure, and the present disclosure is not limited thereto.

### EXAMPLES

### Example 1

Inside a glove box (N₂, H₂O<10 ppm), 130 ml of silicone oil (1CS), 20 g of a sintered product having a composition of Li_{5.5}PS_{4.5}Cl_{1.5}, and 300 g of ZrO₂ 3 mm beads were inserted into a 500 ml HDPE container.

After the mixture was milled at 100 rpm for 4 hours in a ball milling apparatus, the slurry milled inside the glove box (N₂, H₂O<10 ppm) was passed through a 400-mesh (38 pm) sieve and dehydrated through a suction filtering device (pore size: 0.5 *µ*m).

Thereafter, the dehydrated product was dried for 2 hours in a vacuum oven (10 Torr, 70°C) and then cooled (50°C) in a N₂ atmosphere, followed by recovery, thereby preparing a solid electrolyte.

### Example 2

Inside a glove box (N₂, H₂O<10 ppm), 500 ml of silicone oil (1CS) and 40 g of a milled product of Li_{5.5}PS_{4.5}Cl_{1.5} with a particle size of 6 *µ*m were inserted, and then the slurry was agitated.

Then, 500 g of ZrO₂ 0.5 mm beads were added into a milling vessel, and the slurry agitated by setting the agitator speed to 6 m/s and the pump speed to 2 ml/s was circulated for 40 minutes, and then transferred to a container.

Then, inside the glove box (N₂, H₂O<10 ppm), dehydration was performed through a suction filtering device (pore size: 0.5 gm). Thereafter, the dehydrated product was dried for 2 hours in a vacuum oven (10 Torr, 70°C) and then cooled (50°C) in a N₂ atmosphere, followed by recovery, thereby preparing a solid electrolyte.

### Comparative Example 1

A solid electrolyte was prepared by the same method as in Example 1 except that anhydrous xylene was used instead of the silicone oil.

### Comparative Example 2

A solid electrolyte was prepared by the same method as in Example 1 except that anhydrous xylene (1CS) was used instead of the silicone oil.

### Test Examples

Examples 1 and 2 and Comparative Example 1 and 2 of the present disclosure were measured for ion conductivity and particle size, which are then shown, together with process conditions, in Table 1 below.

**TABLE 1**

| | ITEM | | Example 1 | Example 2 | Comparativ e Example 1 | Comparativ e Example 2 |
|---|---|---|---|---|---|---|
| Composit ion | Li | mol | 5.5 | 5.5 | 5.5 | 5.5 |
| | P | | 1 | 1 | 1 | 1 |
| | S | | 4.5 | 4.5 | 4.5 | 4.5 |
| | Cl | | 1.5 | 1.5 | 1.5 | 1.5 |
| Milling device | | Type | Ball mill | Bead mill | Ball mill | Bead mill |
| Solvent | | Type | Silicone oil | Silicone oil | Xylene | Xylene |
| Drying | Temperat ure | °C | 70 | 70 | 70 | 70 |
| Drying | Time | hour | 2 | 2 | 2 | 2 |
| Particle size | Dmin | PM | 0.75 | 0.18 | 0.63 | 0.26 |
| | D10 | PM | 1.10 | 0.51 | 1.11 | 0.70 |
| | D50 | PM | 3.55 | 1.31 | 4.31 | 1.99 |
| | D90 | PM | 6.23 | 2.50 | 8.24 | 3.84 |
| | Dmax | PM | 14 | 7 | 19 | 8 |
| Ion conductivity | | mS/cm | 2.21 | 1.93 | 1.54 | 1.53 |

### X-ray diffraction analysis and Raman spectrum analysis

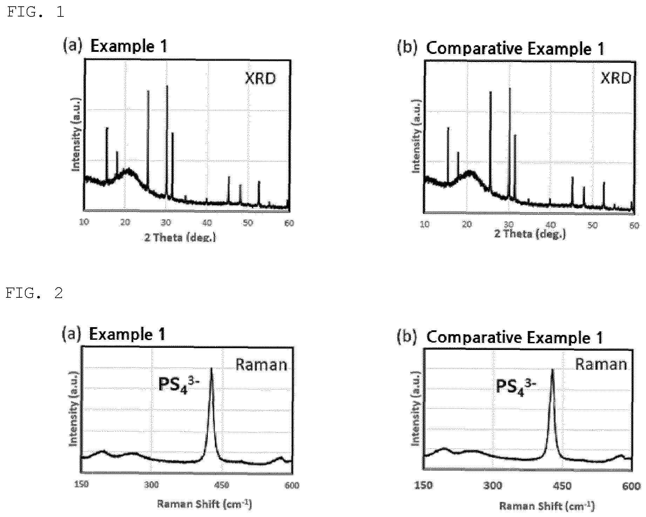

FIG. 1 shows X-ray diffraction analysis results of Example 1 and Comparative Example 1 of the present disclosure, and FIG. 2 shows Raman spectrum analysis results of Example 1 and Comparative Example 1 of the present disclosure.

Referring to FIGS. 1 and 2, even Example 1 using, as a solvent, a silicone oil harmless to the human body, showed no reactivity between the solvent and a solid electrolyte, an argyrodite crystal phase and PS₄³⁻ peak, and no impurities formed.

### Particle size analysis

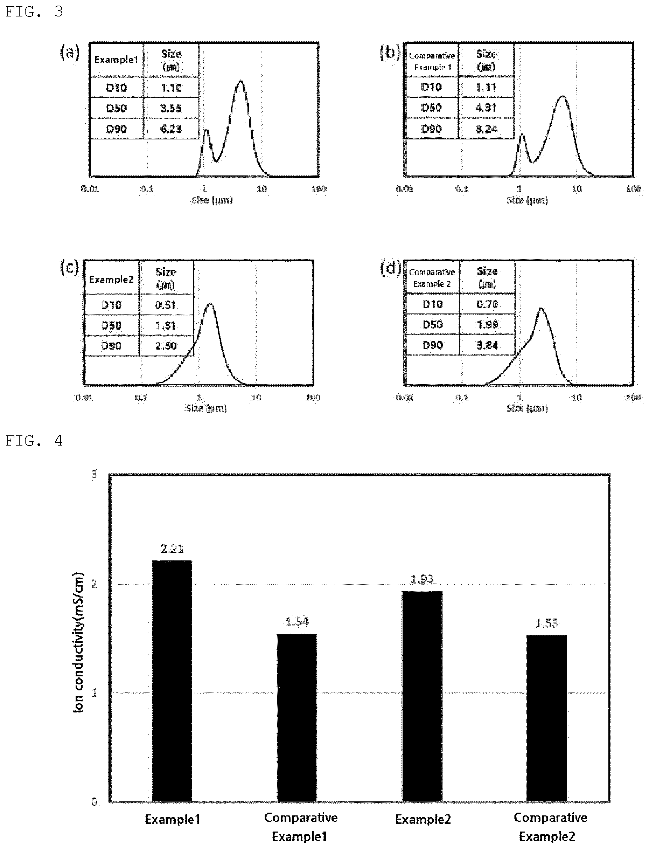

FIG. 3 shows particle size analysis results of the solid electrolytes of Examples 1 and 2 and Comparative Examples 1 and 2 of the present disclosure by using particle size analysis (PSA).

Referring to FIG. 3, Examples 1 and 2 using a silicone oil as a solvent showed further reduced particle sizes compared with Comparative Examples 1 and 2 using xylene as a solvent. It could be therefore confirmed that the use of a silicone oil as a solvent lead to an excellent milling effect and a more precise control of the particle size of solid electrolytes.

### Ion conductivity

FIG. 4 shows ion conductivity measurement results of Examples 1 and 2 and Comparative Examples 1 and 2 of the present disclosure.

Referring to FIG. 4, Examples 1 and 2 using a silicone oil as a solvent showed equivalent ion conductivity compared with Comparative Examples 1 and 2 using xylene as a solvent. It could be therefore confirmed that the use of, as a solvent, xylene harmful to the human body can be replaced. In general, the ion conductivity is reduced as the particle size is smaller, but the use of a silicone oil as a solvent for wet milling can show higher ion conductivity despite a smaller particle size.

Although the preferable exemplary embodiments of the present disclosure have been described above, the present disclosure is not limited thereto, and various modifications may be made without departing from the range of the claims, detailed description, and accompanying drawings, which belong to the scope of the present disclosure.

Accordingly, the substantive scope of right of the present disclosure will be defined by the appended claims and equivalents thereof.

## Claims

1. A method for manufacturing a sulfide-based solid electrolyte, the method comprising:
providing a sulfide-based compound;
adding the sulfide-based compound to a silicone oil, followed by milling; and
drying the milled sulfide-based compound.

2. The method of claim 1, wherein the silicone oil is a cyclic polysiloxane, a linear polysiloxane, or a mixture thereof.

3. The method of claim 1, wherein the silicone oil is at least one selected from the group consisting of octamethyltrisiloxane, decamethyltetrasiloxane, dodecamethylpentasiloxane, decamethylcyclopentasiloxane, cyclopentasiloxane, cyclohexasiloxane, dimethicone, methyl trimethicone, and caprylyl methicone.

4. The method of claim 1, wherein the milling is performed by using any one of a ball mill or a bead mill.

5. The method of claim 1, wherein the milling involves no dispersant.

6. The method of claim 1, wherein the sulfide-based solid electrolyte has a particle size (D50) of 4 gm or less.

7. The method of claim 1, wherein the sulfide-based compound is added in a content of 5 to 30 parts by weight relative to 100 parts by weight of the silicone oil.

8. The method of claim 1, wherein the sulfide-based compound includes lithium, phosphor, sulfur, and a halogen element.

9. A solid electrolyte manufactured by the method of claim 1.

10. The solid electrolyte of claim 9, wherein the solid electrolyte has an argyrodite-type crystal structure.

11. The solid electrolyte of claim 9, wherein the solid electrolyte has an ion conductivity of 1.5 mS/cm or more.

12. An electrode comprising the solid electrolyte of claim 9.

13. A secondary battery comprising the electrode of claim 12.
